# EUROPÄISCHE PATENTSCHRIFT

(11) **EP 3 204 258 B1**
(45) Veröffentlichungstag und Bekanntmachung des Hinweises auf die Patenterteilung: **15.07.2020**
(21) Anmeldenummer: 15762654.0
(22) Anmeldetag: 15.09.2015
(51) Int. Cl.: B60N 3/00, B60N 3/10

(54) **VERRASTBARER KLAPPTISCH MIT KOMFORTAUSSTATTUNG**
LOCKABLE FOLDING TABLE WITH COMFORT EQUIPMENT
TABLETTE RABATTABLE POUVANT ÊTRE BLOQUÉE AVEC EQUIPEMENT DE CONFORT

(30) Priorität: 06.10.2014 DE 102014220200
(43) Veröffentlichungstag der Anmeldung: 16.08.2017
(73) Patentinhaber: Volkswagen Aktiengesellschaft, 38440 Wolfsburg (DE)
(72) Erfinder: BOST, Bettina, 38173 Sickte (DE); FOLLESA, Roberto, 38102 Braunschweig (DE); HARTWIG, Fred, 38300 Wolfenbüttel (DE); SCHWERTER, Johannes, 38122 Braunschweig (DE)
(86) Internationale Anmeldenummer: PCT/EP2015/071124
(87) Internationale Veröffentlichungsnummer: WO 2016/055244

(56) Entgegenhaltungen:
- WO-A1-2011/133758
- DE-A1-102004 046 044
- DE-A1-102008 057 790
- DE-A1-102012 004 342

## Beschreibung

Die Erfindung betrifft einen Klapptisch mit einer gegenüber einer tragenden Struktur über mindestens eine Stütze in verschiedenen Klapp-Positionen abstützbaren Grundplatte, der Komfort-Komponenten zugeordnet sind.

Die Druckschrift DE 103 42 409 B4 der Anmelderin beschreibt ein Verriegelungssystem eines Klapptisches eines Kraftfahrzeugsitzes, der an einer Rückseite eines Rückenlehnenteiles angeordnet ist, der aus einer parallel zu der Rückseite des Rückenlehnenteiles angeordneten Nichtgebrauchsstellung in eine Gebrauchsstellung senkrecht zur Rückseite des Rückenlehnenteiles schwenkbar ist, wobei der Klapptisch eine Stütze umfasst, die ein erstes Stützenende aufweist, das schwenkbar an der Rückseite des Rückenlehnenteiles angebracht ist, um den Klapptisch wahlweise in seiner Gebrauchsstellung oder in seiner Nichtgebrauchsstellung zu halten. In Gebrauchsstellung ist ein zweites Stützenende des Klapptisches an einem ersten wippenartigen Element in einer ersten Wippenaufnahme und in Nichtgebrauchsstellung des Klapptisches in einem zweiten wippenartigen Element in einer zweiten Wippenaufnahme verrastet, wobei das erste wippenartige Element auf einer ersten Wippenschwenkachse und das zweite wippenartige Element auf einer zweiten Wippenschwenkachse an jeweils einem Endanschlag mindestens eines Stützenführungselementes angeordnet und gelagert ist.

Ferner ist auf der dem zweiten Stützenende der Stütze abgewandten Seite der wippenartigen Elemente jeweils mindestens eine Feder angeordnet, so dass das zweite Stützenende der Stütze bei einer Bewegung des Klapptisches von der Gebrauchsstellung in die Nichtgebrauchsstellung und umgekehrt das jeweilige wippenartige Element kontaktiert und durch eine auf die mindestens eine Feder aufgebrachte Kraft ein Aufwippen um die jeweilige Wippenschwenkachse bewirkt, wonach das zweite Stützenende in der jeweiligen Wippenaufnahme verrastet und durch die mindestens eine Feder ein Zuwippen des jeweiligen wippenartigen Elementes um die jeweilige Wippenschwenkachse bewirkt wird. Diese Lösung der Anmelderin ermöglicht eine besonders leichtgängige geräuscharme und gedämpfte komfortable Klappbewegung des Klapptisches.

Die Druckschrift US 5,947,033 A1 offenbart einen Klapptisch an der Sitzlehnrückseite eines Kraftfahrzeugsitzes mit einer Mehrstufenverrastung. Die Neigung des Tisches ist individuell in Abhängigkeit von vorhandenen Raststufen einstellbar. Eine schwenkbar gelagerte Abstützung ist an der Unterseite des Klapptisches angeordnet. Die Abstützung greift in einer Funktionsstellung des Klapptisches in eine von mehreren an der Sitzlehnenrückseite angeordneten Raststufen ein. Jede Raststufe definiert eine vorbestimmte Neigung des Klapptisches. Der Klapptisch ist auch als Ablage für ein Buch oder einen elektronischen Bildschirm geeignet.

Die Druckschrift US 6,279,800 B1 zeigt einen Tisch für eine Rückenlehne eines Sitzes mit einer Mehrstufenverrastung, welche aus mehreren an der Unterseite des Tisches angeordneten Raststufen besteht. Eine schwenkbare Abstützung greift je nach gewünschter Neigung und Höhe des Tisches in einer der Raststufen ein. Hierdurch kann der Tisch auch zur Ablage eines tragbaren Computers genutzt werden.

Der Erfindung liegt nun die Aufgabe zugrunde den Komfort eines Klapptischs noch weiter zu erhöhen.

Ausgangspunkt der Erfindung ist ein Klapptisch mit einer gegenüber einer tragenden Struktur über mindestens eine Stütze in verschiedenen Klapp-Positionen abstützbaren Grundplatte, wobei der Klapptisch mindestens eine Komfort-Komponente zum mehrstufigen Verrasten der Grundplatte in den verschiedenen Klapp-Positionen aufweist, der beispielsweise aus der Druckschrift DE 10 201 004 342 B4 bekannt ist.

Die mehrstufige Klappmechanik stellt in vorteilhafter Weise sicher, dass die Neigung des Klapptisches, insbesondere in Abhängigkeit der Neigung einer Rückenlehne leicht und komfortabel einstellbar ist. Insbesondere ist der Blickwinkel eines Anwenders auf ein Buch oder eine Zeitschrift oder dergleichen oder ein elektronisches Gerät in Abhängigkeit der Neigung der Rückenlehne und/oder des Lichteinfalls optimal einstellbar.

Erfindungsgemäß ist vorgesehen, dass der Klapptisch die Klappmechanik zum mehrstufigen Verrasten in den verschiedenen Klapp-Positionen auf der Unterseite der Grundplatte ausgebildet, wobei die Klappmechanik einen ersten Klapphebel mit einer ersten Hebelschwenkachse zur Winkeleinstellung des Klapptisches umfasst, der über ein zu der Stütze gehörendes Stützglied der Stütze in der Verriegelungsstellung der Klappmechanik zu der Unterseite der Grundplatte weisende Rastvorkehrungen aufweist, und einen zweiten Klapphebel mit einer zweiten Hebelschwenkachse umfasst, wobei der erste Klapphebel für die Winkeleinstellung des Klapptisches über das Stützglied der Stütze zuständig ist, während der zweite Klapphebel den ersten Klapphebel in der Verriegelungsstellung der Klappmechanik verriegelnd abstützt.

Die beiden drehbeweglichen Klapphebel sind über seitliche Führungen derart miteinander verbunden, dass die Klapphebel trotz der Verbindung drehbeweglich bleiben.

Nach der Betätigung des zweiten Klapphebels über ein in den Klapphebel integriertes Bedienelement ist eine Entriegelungsstellung der Klappmechanik bewirkbar, da erst ein durch die Betätigung hervorgerufenes Verschwenken des zweiten Klapphebels um seine zweite Hebelschwenkachse den ersten Klapphebel und die zu der Unterseite der Grundplatte weisenden Rastvorkehrungen freigibt.

In vorteilhafter Weise sind die Klapphebel miteinander kombiniert angeordnet, wodurch sich die Haltekräfte des Klapptisches erhöhen. Bei auf den Klapptisch wirkenden über den Haltkräften liegenden zu hohen Missbrauchskräften ist ferner in vorteilhafter Weise sicher gestellt, dass der Klapptisch über die Rastvorkehrungen der beiden Klapphebel sicher in seine Nichtgebrauchsposition zurückkehrt, wobei die seitlichen Führungen eine Führung der Klapphebel gewährleisten.

Da der zweite Klapphebel stets über seitliche Führungen mit dem ersten Klapphebel verbunden ist, übt er eine Sicherungsfunktion hinsichtlich der Führung des ersten Klapphebels aus und sorgt zudem für die Erhöhung der Haltkraft des Klapptisches.

Zudem wird mittels des zweiten Klapphebels eine bedienerfreundliche Auslösebetätigung zum Ausklappen des Klapptisches ermöglicht, da an dem zweiten Klapphebel an der Frontseite des Klapptisches das leicht erreichbare zum zweiten Klapphebel gehörende Bedienelement angeordnet ist.

Erfindungsgemäß ist der Grundplatte des Klapptisches in Kombination mit der Klappmechanik mit Mehrstufen-Verrastung mindestens eine weitere Komfort-Komponente zur Ablage oder Aufbewahrung von Gegenständen zugeordnet.

Es ist vorgesehen, dass in die Grundplatte ein komfortabler Becherhalter integriert ist.

Bevorzugt umfasst der Becherhalter ein Halteteil und ein Abstützelement.

In bevorzugter Ausgestaltung ist das Halteteil über Führungselemente, insbesondere ein erstes Paar von Führungselementen und das Abstützelement über ein zweites Paar von Führungselementen aus einer Nichtgebrauchsposition in eine Gebrauchsposition und umgekehrt geführt, wobei die Führungselementepaare auf der Unterseite der Grundplatte angeordnet sind.

Bevorzugt ist ferner, dass das Halteteil noch zusätzlich über Führungselemente, insbesondere ein drittes Paar von Führungselementen aus der Nichtgebrauchsposition in eine Gebrauchsposition und umgekehrt geführt ist, wobei das dritte Führungselementepaar ebenfalls auf der Unterseite der Grundplatte angeordnet ist.

Es versteht sich, dass die Führungselemente nicht zwingend paarweise angeordnet sein müssen. Es sind in einer alternativen Ausgestaltung auch einzelne Führungselemente ausbildbar.

Die Anordnung des Becherhalters erfolgt bevorzugt seitlich der benutzerseitigen Frontseite der Grundplatte des Klapptisches.

Erfindungsgemäß ist der Becherhalter aus einem Seitenteil des Korpus der Grundplatte des Klapptisches aus der Nichtgebrauchsposition in die Gebrauchsposition aus- und einfahrbar, wobei die Führungselemente beziehungsweise Führungselementepaare quer zur benutzerseitigen Frontseite des Klapptisches verlaufend auf der Unterseite der Grundplatte angeordnet sind.

Die Verschiebbarkeit des Becherhalters über Führungselementepaare stellt in vorteilhafter Weise eine einfache und stabile und somit insgesamt robuste Ausgestaltung mit hoher Lebensdauer dar, die zudem in der Lage ist, insbesondere in der Gebrauchsstellung des Becherhalters auf den Becherhalter wirkende Kräfte in die Grundplatte einzuleiten.

Ferner ist bevorzugt vorgesehen, dass in die Grundplatte mindestens eine schräg ausgebildete erste Vertiefung zum Ablegen und Abstützen von Gegenständen integriert angeordnet ist.

In die erste Vertiefung ist ein erster Einleger eingelegt, der aus einem den Gegenstand verrutschsicher haltenden Material ausgebildet ist.

Das Material des ersten Einlegers ist oberflächenschonend ausgebildet. Es wird insbesondere weicher elastischer Kunststoff vorgeschlagen. Durch diese bevorzugte Ausgestaltung, wird insbesondere den Wünschen der Verbraucher nachgekommen, die sich auf einem Klapptisch, über die bisher üblichen Ablagemöglichkeiten von Gegenständen hinaus, eine komfortablere und individuelle Ablage- und Abstützmöglichkeit von Gegenständen wünschen.

Nebenher dient die in Richtung des Benutzers schräg ausgebildete erste Vertiefung auch als sichere muldenartige Ablagemöglichkeit von Kleinteilen, wie etwa Schreibutensilien oder dergleichen. Auf der Benutzerseite weist die erste Vertiefung ihre tiefste Stelle auf.

Zudem ist bevorzugt vorgesehen, dass die Grundplatte mindestens eine Umrandung ausbildet, wobei vorgesehen ist, dass der Rand der Grundplatte in Richtung des Benutzers leicht ansteigend ausgebildet ist. Der in der jeweiligen Klapp-Position zu dem Benutzer des Klapptisches weisende Randbereich des Randes weist dabei gegenüber der Ablagefläche des Klapptisches die größte Höhe auf.

Es ist vorgesehen, dass zumindest in einem Teilbereich der Ablagefläche des Klapptisches, insbesondere in der von der Umrandung des Klapptisches gebildeten weiteren zweiten Vertiefung ein zweiter Einleger angeordnet ist, der die gleichen Materialeigenschaften und Vorteile aufweist, wie der erste Einleger.

Bevorzugt ist, dass die zweite Vertiefung und der zweite Einleger in der zweiten Vertiefung von dem U-förmig ausgebildeten Rand der Grundplatte begrenzt sind. Durch die U-förmige Ausbildung weist die Grundplatte des Klapptisches an einer Seite keinen Rand auf. An dieser von dem Benutzer weg weisenden Seite der Grundplatte des Klapptisches beginnt die schräge erste Vertiefung. Die Ablagefläche der ersten Vertiefung weist somit am oberen Rand der Grundplatte keinen störenden Rand auf.

Der zweite Einleger in der zweiten Vertiefung bildet bevorzugt in den jeweiligen Klapp-Positionen des Klapptisches, in dem die größte Höhe aufweisenden, zu dem Benutzer gerichteten Randbereich des Randes, eine Überdeckung aus.

Das Material des zu dem Benutzer gerichteten Randbereichs ist im Bereich der vorgesehenen Überdeckung in der Art einer Ausnehmung im Randbereich reduziert. In dieser durch Materialreduzierung gebildeten Ausnehmung des Randes wird der Einleger eingelegt und überdeckt somit die Ablagefläche auf der Grundplatte des Klapptisches und die Innenseite des zu dem Benutzer gerichteten Randbereiches. Durch die für den zweiten Einleger vorgesehene Ausnehmung im Randbereich verläuft die Innenfläche des Einlegers störkantenfrei bündig mit der Innenfläche der angrenzenden Randbereiche. An dem zu dem Benutzer gerichteten Randbereich des Randes kann sich ein Gegenstand, insbesondere in einer geneigten Klapp-Position des Klapptisches, sehr gut abstützen und ist somit durch die spezielle Ausgestaltung des zweiten Einlegers gegen ein Abrutschen gesichert. Der Gegenstand liegt mit seiner Unterseite und seiner zu dem Randbereich gerichteten Stirnseite rutschsicher auf dem zweiten Einleger auf.

Die sichere Lage von Gegenständen auf Klapptischen ist bei der Entwicklung komfortabler Klapptische von besonderer Bedeutung, insbesondere dann, wenn sich der Klapptisch in einer der geneigten Positionen befindet.

Insbesondere für die geneigten Positionen des Klapptisches wurden die beiden Einleger zum Aufliegen und/oder Abstützen von Gegenständen entwickelt, die durch ihre Oberflächenrauigkeit dafür sorgen, dass Gegenstände, insbesondere Kleinteile, Bücher, Zeitschriften oder dergleichen und insbesondere elektronische Geräte sicher auf der sich in der geneigten Klapp-Position befindenden Grundplatte des Klapptisches aufliegen.

Insbesondere für besonders stark nach unten geneigte Positionen des Klapptisches bildet die Grundplatte den zu dem Benutzer gerichteten Randbereich des Randes aus, der insbesondere im Frontbereich des Klapptisches gegenüber den Seitenbereichen besonders stark erhaben ausgebildet ist, so dass in vorteilhafter Weise in stark geneigten Positionen des Klapptisches ein Auflagerand geschaffen ist, der zudem zum Halten des Gegenstandes und zum Schutz des Gegenstandes vor Verkratzen von dem Einleger mit überdeckt wird. Insofern bietet der Klapptisch in allen geneigten Positionen in komfortabler Weise eine sichere Ablagemöglichkeit und Abstützmöglichkeit von Gegenständen.

Die beiden Einleger können aus einem oder verschiedenen Materialien, insbesondere einem oder verschiedenartige Kunststoffe ausgebildet sein.

Schließlich ist eine weitere Komfortkomponente vorgesehen. In der Grundplatte ist mindestens eine komfortable Kabelbefestigungsvorrichtung integriert angeordnet, die vorzugsweise ebenfalls insbesondere seitlich der benutzerseitigen Frontseite der Grundplatte des Klapptisches in dem Seitenteil des Korpus der Grundplatte angeordnet ist.

Insbesondere bei der Benutzung von elektronischen Geräten auf Klapptischen ist eine Möglichkeit zur Halterung von Kabeln von besonderem Vorteil. Die weiteren Vorteile der spezifisch ausgebildeten Kabelbefestigungsvorrichtung sind im nachfolgenden Beschreibungsteil noch näher erläutert.

Eine mögliche Ausführung der Erfindung wird nachfolgend in einem Ausführungsbeispiel erläutert. Für die Zwecke der Beschreibung soll die in Längsrichtung des Fahrzeuges liegende Richtung mit "x" bezeichnet werden. Mit "y" wird die Richtung in der Waagerechten des Fahrzeuges quer zur x-Richtung bezeichnet, und mit "z" wird die Richtung in der Vertikalen des Fahrzeuges quer zur x-Richtung bezeichnet. Diese Bezeichnungsweise der Raumrichtungen in kartesischen Koordinaten entspricht dem in der Kraftfahrzeugindustrie allgemein verwendeten Koordinatensystem. Innerhalb aller Figuren werden nachfolgend die gleichen Bezugszeichen für gleiche Bauteile verwendet, wobei gegebenenfalls nicht in jeder Figur erneut alle bereits vorgestellten Bauteile anhand der Bezugszeichen nochmals erläutert werden.

Die Erfindung wird nachfolgend in einem Ausführungsbeispiel anhand der zugehörigen Zeichnungen erläutert. Es zeigen:
- Figur 1A: eine perspektivische Darstellung eines Rückenlehnenteiles eines Fahrzeugsitzes mit einem Klapptisch in einer ersten Klapp-Position mit einem im Wesentlichen waagerecht angeordneten Klapptisch;
- Figur 1B: einen Schnitt durch das Polster, die Struktur und den Klapptisch des Rückenlehnenteiles in der ersten Klapp-Position gemäß Figur 1A;
- Figur 1C: eine vergrößerte Schnittdarstellung durch den Klapptisch in der ersten Klapp-Position gemäß Figur 1B in seiner Verriegelungsstellung;
- Figur 1D: eine vergrößerte Schnittdarstellung durch den Klapptisch in der ersten Klapp-Position gemäß Figur 1B in seiner Entriegelungsstellung;
- Figur 2A: eine perspektivisch Darstellung des Rückenlehnenteiles des Fahrzeugsitzes mit dem Klapptisch in einer zweiten Klapp-Position mit einem nach unten geneigten Klapptisch;
- Figur 2B: einen Schnitt durch das Polster, die Struktur und den Klapptisch des Rückenlehnenteiles in der zweiten Klapp-Position gemäß Figur 2A;
- Figur 2C: eine vergrößerte Schnittdarstellung des Klapptisches gemäß Figur 2B mit einem auf einer Grundplatte des Klapptisches angeordneten Tablet-PC;
- Figur 3A: eine vergrößerte Schnittansicht auf den Klapptisch in der ersten Klapp-Position gemäß den Figuren 1A, 1B, jedoch mit der Stütze;
- Figur 3B: die Grundplatte in einer Komfortausstattung;
- Figur 3C: eine vergrößerte Darstellung einer als Kabelbefestigungsvorrichtung ausgebildeten Komfortkomponente der Grundplatte;
- Figur 4A: eine Draufsicht auf die transparent dargestellte Grundplatte zur Verdeutlichung einer weiteren Komfortkomponente, einem Becherhalter (Cupholder) umfassend ein Halteteil und ein Abstützelement;
- Figur 4B: eine perspektivische Ansicht auf den Becherhalter;
- Figur 4C: eine perspektivische Unteransicht auf die Lagerstelle des Halteteiles des Becherhalters gegenüber dem Abstützelement;
- Figur 4D: eine perspektivische Übersichtsdarstellung auf den Becherhalter aus der Blickrichtung einer den Klapptisch nutzenden Person;
- Figur 4E: eine perspektivische Seitenansicht auf eine Führung des Becherhalters;
- Figur 4F: eine Unteransicht auf den Becherhalter in Gebrauchsposition; und
- Figur 4G: eine Unteransicht auf den Becherhalter in Nichtgebrauchsposition.

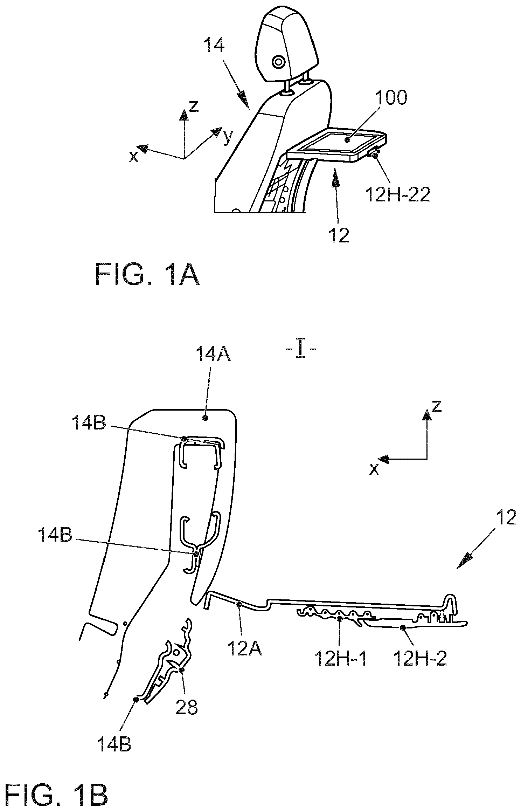

Die Figur 1A zeigt in einer perspektivischen Darstellung ein Rückenlehnenteil 14 eines Fahrzeugsitzes mit einem Klapptisch 12 in einer ersten Klapp-Position I, der in einer im Wesentlichen waagerechten Lage, insbesondere in der x/y-Ebene angeordnet ist.

Die Figur 1B zeigt einen in einer x/z-Ebene geführten Schnitt durch das Rückenlehnenteil 14. Das Rückenlehnenteil 14 umfasst ein Polster 14A, das auf einer tragenden Struktur 14B des Rückenlehnenteiles 14 angeordnet ist. Gezeigt ist ferner ein Befestigungselement 28, welches den Klapptisch 12 mit der Struktur 14B des Rückenlehnenteiles 14 verbindet und den Klapptisch 12 trägt.

Der Klapptisch 12 umfasst eine Grundplatte 12A. Auf einer Unterseite der Grundplatte 12A sind zwei Hebel 12H-1 und 12H-2 angeordnet. Der erste Hebel 12H-1 dient der Winkeleinstellung des Klapptisches 12 und der zweite Hebel 12H-2 dient der Kraftunterstützung beim Halten des Klapptisches 12 und der Führung der Hebel 12H-1, 12H-2 in einer der möglichen geklappten Positionen des Klapptisches 12.

Dabei wird nachfolgend zunächst detailliert auf die erste Klapp-Position I eingegangen, die auch als im Wesentlichen waagerechte Arbeitsposition bezeichnet wird.

Anschließend wird detailliert auf eine zweite Klapp-Position II eingegangen, die auch als geneigte Arbeitsposition bezeichnet wird.

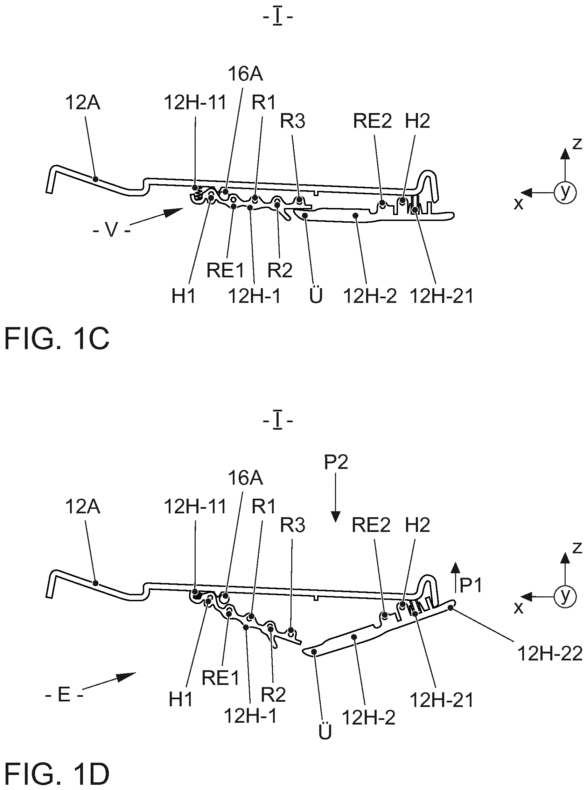

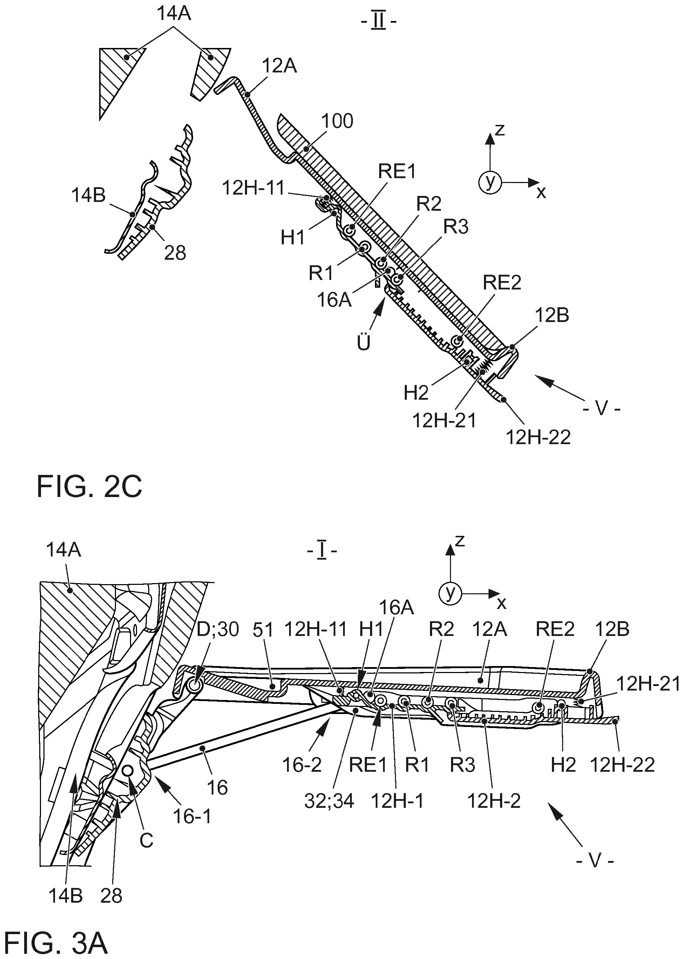

Die Figur 1C zeigt eine vergrößerte Schnittdarstellung durch den Klapptisch 12 gemäß Figur 1B. Vergleiche Figur 3A. Der Klapptisch 12 ist in der im Wesentlichen waagerechten Arbeitsposition I angeordnet und befindet sich in Verriegelungsstellung V.

Von links nach rechts gesehen, umfasst der erste Hebel 12H-1 ein erstes Federelement 12H-11 und eine Endanschlags-Rolle RE1.

Auf der dem Rückenlehnenteil 14 zugewandten Seite der Endanschlagsrolle RE1 ist in der im Wesentlichen waagerechten Arbeitsposition I des Klapptisches 12 ein endseitiges Stützglied 16A der Stütze 16 verrastet angeordnet. Das Stützglied 16A ist als quer zur Stütze 16 ausgerichteter Stützbolzen ausgebildet. Das Stützglied 16A ist in der im Wesentlichen waagerechten Arbeitsposition I zwischen der Unterseite der Grundplatte 12A und der Oberseite des ersten Hebels 12H-1 und seitlich zwischen einer zu der Unterseite der Grundplatte 12 gerichteten Erhebung des ersten Hebels 12H-1 und der Rolle RE1 sicher verrastet.

Im Ausführungsbeispiel schließen sich in Figur 3A - von links nach rechts gesehen - weitere Rollen R1, R2 und R3 an, auf die noch näher eingegangen wird.

Das erste Federelement 12H-11 ist unter Vorspannung gegen die Unterseite der Grundplatte 12A des Klapptisches 12 und der zu der Unterseite der Grundplatte 12A des Klapptisches 12 gerichteten Seite des ersten Hebels 12H-1 abgestützt. Das erste Federelement 12H-11 sorgt dadurch dafür, dass der lange Hebel des ersten Hebels 12H-1 stets um die erste Hebelschwenkachse H1 an die Unterseite der Grundplatte 12A des Klapptisches 12 gedrückt wird.

Der zweite Hebel 12H-2 umfasst ebenfalls eine Endanschlags-Rolle RE2. Befindet sich das Stützglied 16A der Stütze 16 auf der dem Rückenlehnenteil abgewandten Seite der Endanschlags-Rolle RE2, befindet sich der Klapptisch 12 in einer dritten Position, die als Nichtgebrauchsposition des Klapptisches 12 bezeichnet wird, da der Klapptisch 12 flächig an dem Rückenlehnenteil 14 anliegt und somit parallel zu dem Rückenlehnenteil 14 angeordnet ist. Jetzt ist das Stützglied 16A zwischen der Unterseite der Grundplatte 12A und der Oberseite des zweiten Hebels 12H-2 und seitlich zwischen einer zu der Unterseite der Grundplatte 12 gerichteten Erhebung des zweiten Hebels 12H-2 und der Endanschlags-Rolle RE2 in Nichtgebrauchsposition sicher verrastet.

Die Nichtgebrauchsposition des Klapptisches 12 ist in den Figuren nicht näher dargestellt.

An die Rolle RE2 des zweiten Hebels 12H-2 schließt sich gemäß Figur 3A - von links nach rechts gesehen - ein weiteres Federelement 12H-21 an.

Das zweite Federelement 12H-21 ist ebenfalls unter Vorspannung gegen die Unterseite der Grundplatte 12A des Klapptisches 12 und der zur Unterseite der Grundplatte 12A des Klapptisches 12 gerichteten Seite des zweiten Hebels 12H-2 abgestützt. Das zweite Federelement 12H-21 sorgt ebenfalls stets dafür, dass der zweite Hebel 12H-2 um die zweite Hebelschwenkachse H2 an die Unterseite der Grundplatte 12A des Klapptisches 12 gedrückt wird.

Der zweite Hebel 12H-2 weist in seiner Längserstreckung einen Überstand Ü (Figur 2C) auf, der in der Verriegelungsstellung V des Klapptisches 12 über das Endstück des ersten Hebels 12H-1 greift, wodurch der erste Hebel 12H-1 durch den zweiten Hebel 12H-2 in seiner Verriegelungsstellung V gesichert ist und zudem eine Kraftunterstützung bewirkt.

Die Kraftunterstützung wird bewirkt, da die Kraftrichtung der Vorspannkraft der beiden Federelemente 12H-11 und 12H-21 der beiden Hebel 12H-1, 12H-2 gegen eine auf den Klapptisch 12 wirkende Kraft gerichtet ist und die Hebel 12H-1, 12H-2 in Verriegelungsstellung V hält. Diese Kraftunterstützung und Sicherung der Hebel 12H-1, 12H-2 wirkt sowohl in der im Wesentlichen waagerechten Arbeitsposition I als auch in der geschwenkten Arbeitsposition II des Klapptisches 12. Durch diese Ausgestaltung werden die Haltekräfte zum Halten der Grundplatte 12A des Klapptisches 12 in ihrer jeweiligen Position erhöht.

Der Klapptisch 12 kann auch ohne zweiten Hebel 12H-2 ausgebildet sein. In einem solchen Fall ist die zweite Endanschlags-Rolle RE2 an der Unterseite der Grundplatte 12A des Klapptisches 12 angeordnet. In einem solchen Fall übernimmt das erste Federelement 12H-11 des ersten Hebels 12H-1 die Sicherung und Abstützung allein, wobei das erste Federelement 12H-11 entsprechend stärker ausgebildet ist.

Die Figur 1D zeigt eine vergrößerte Schnittdarstellung durch den Klapptisch 12 gemäß Figur 1B. Der Klapptisch 12 ist noch in der im Wesentlichen waagerechten Arbeitsposition I angeordnet. Er befindet sich jedoch jetzt in einer Entriegelungsstellung E.

Der zweite Hebel 12H-2 umfasst das in den zweiten Hebel 12H-2 integrierte Bedienelement 12H-22, auf welches ein Bediener in Pfeilrichtung gemäß dem Pfeil P1 eine Bedienhandlung mit einer vorgebbaren Kraft ausübt, die gegen die Vorspannkraft des zweiten Federelementes 12H-21 wirkt.

Der zweite Hebel 12H-2 schwenkt entgegen der Uhrzeigerrichtung um die zweite Hebelschwenkachse H2 und nimmt den ersten Hebel 12H-1 über eine in den Figuren nicht näher dargestellte seitliche Führung mit. Der erste Hebel 12H-1 schwenkt durch die seitliche Führung gleichzeitig um die erste Hebelschwenkachse H1 in Uhrzeigerrichtung. Die Schwenkbewegung des ersten Hebels 12H-1 erfolgt dabei gegen die Vorspannkraft des ersten Federelementes 12H-11. Dabei bleiben der erste und der zweite Hebel 12H-1, 12H-2 über die seitliche Führung stets in Verbindung.

Durch eine von oben auf den Klapptisch 12 wirkende Kraft in Kraftrichtung gemäß dem Pfeil P2 schwenkt der erste Hebel 12H-1 in Uhrzeigerrichtung um die Hebelschwenkachse H1, so dass das Stützglied 16A frei aus dem Endanschlag kommt, und bei einer Neigungsverstellung des Klapptisches 12 frei über die Endanschlags-Rolle RE1 laufen kann.

Das Schwenken des ersten Hebels 12H-1 um die erste Schwenkachse H1 - von der Unterseite der Grundplatte 12A des Klapptisches 12 weg -, erfolgt während der Neigungsverstellung des Klapptisches 12 von der im Wesentlichen waagerechten Klapp-Position I in die geneigte Klapp-Position II beziehungsweise umgekehrt.

Das Stützglied 16A läuft ausgehend von seinem Endanschlag an der Endanschlags-Rolle RE1 bei einem Schwenken des Klapptisches 12 von der im Wesentlichen waagerechten Klapp-Position I in die geneigte Klapp-Position II über die Rollen RE1, R1, R2 beziehungsweise umgekehrt über die Rollen R2, R1, RE1, wodurch eine komfortable leichtgängige und geräuscharme Verstellbewegung und Entrastung aus der waagerechten Klapp-Position I erreicht wird. In der geneigten Klapp-Position II liegt das Stützglied 16A der Stütze 16 zwischen den Rollen R2 und R3.

Das Stützglied 16A der Stütze 16 läuft ausgehend von seinem Endanschlag hinter der Endanschlags-Rolle RE1 bei einem Schwenken des Klapptisches 12 von der im Wesentlichen waagerechten Klapp-Position I in die Nichtgebrauchsposition im Wesentlichen parallel zum Rückenlehnenteil 14 über die Rollen RE1, R1, R2, R3 bis hin zu dem anderen gegenüber liegenden Endanschlag hinter die Endanschlags-Rolle RE2 beziehungsweise umgekehrt über die Rollen RE2, R3, R2, R1 hinter die Endanschlags-Rolle RE1 zurück, wodurch eine komfortable leichtgängige und geräuscharme Verstellbewegung und Verrastung des Klapptisches 12 in den beiden Endpositionen des Klapptisches 12 erreicht wird.

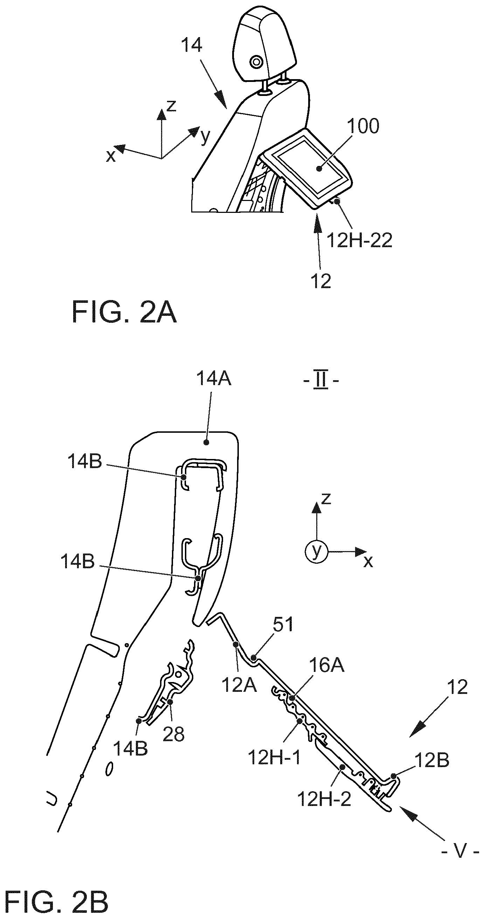

Die Figur 2A zeigt in einer perspektivischen Darstellung ein Rückenlehnenteil 14 eines Fahrzeugsitzes mit einem Klapptisch 12 in der zweiten nach unten geschwenkten/geneigten Klapp-Position II mit einem beispielsweise gegenüber der in Figur 1A gezeigten um 45° aus der im Wesentlichen waagerechten x/y-Ebene nach unten geklappten/geschwenkten Klapptisch 12.

Der Klapptisch 12 ist in Figur 2B in Verriegelungsstellung V dargestellt.

Die Figur 2B zeigt die bereits erläuterten Bauteile des Klapptisches 12 analog zu Figur 1B, jedoch in geneigter Klapp-Position II.

Die Figur 2C zeigt eine vergrößerte Schnittdarstellung gemäß Figur 2B mit einem auf der Grundplatte 12A des Klapptisches 12 angeordneten flachen Gegenstand, insbesondere einem Tablet-PC 100.

Die Figur 3A zeigt eine weitere vergrößerte Schnittansicht auf den Klapptisch 12 mit dem Klapptisch 12 in der im Wesentlichen waagerechten Klapp-Position I gemäß den Figuren 1A, 1B. Hier ist die Stütze 16 dargestellt, die in den geklappten Positionen I, II über das Befestigungselement 28 für eine Abstützung der Grundplatte 12A des Klapptisches 12 an der tragenden Struktur 14B des Rückenlehnenteiles 14 sorgt.

Die Figur 3A zeigt die Stütze 16, umfassend ein erstes Stützenende 16-1 und ein zweites Stützenende 16-2. Das erste Stützenende 16-1 ist an dem Befestigungselement 28 angeordnet.

Das erste Stützenende 16-1 ist in dem Befestigungselement 28 schwenkbar auf einer Stützenschwenkachse C angeordnet. Das Befestigungselement 28 ist an der Struktur 14B des Rückenlehnenteiles 14 befestigt und über mindestens ein Schwenklager 30 an dem Befestigungselement 28 einer Klapptischschwenkachse D ausgebildet. Über die Klapptischschwenkachse D ist die Grundplatte 12A des Klapptisches 12 schwenkbar beziehungsweise klappbar.

Aus der Figur 3A gehen ferner ein erstes Stützenführungselement 32 und ein zweites Stützenführungselement 34 hervor. In Figur 3A ist nur das erste Stützenführungselement 32 sichtbar, während das zweite Stützenführungselement 34 parallel hinter dem ersten Stützenführungselement 32 angeordnet ist.

Die Stützenführungselemente 32, 34 sind an der Unterseite der Grundplatte 12A des Klapptisches 12 angeordnet. Die Stütze 16 greift zwischen die Stützenführungselemente 32, 34 parallel zur Grundplatte 12A angeordneten Stützenführungselemente 32, 34, die einen Führungspalt für die Stütze 16 bilden. Die Stützenführungselemente 32 , 34 sind schienenartig ausgebildet, so dass das endseitig des zweiten Stützenendes 16-2 angeordnete Stützglied 16A, welches quer in y-Richtung zur Stütze 16 angeordnet ist, auf schienenartigen Führungen der Stützenführungselemente 32, 34 verlagerbar ist, sobald der Klapptisch 12 geschwenkt wird.

Dabei läuft das Stützglied 16-1, wie bereits erläutert, auf die Endanschlags-Rollen RE1 und RE2 auf und verrastet jeweils dahinter oder läuft je nach Klapprichtung über die Rollen R1, R2, R3 oder umgekehrt und verrastet sicher zwischen den Rollen RE1/R1 oder R1/R2 oder R2/R3, sobald die Hebel 12H-1, 12H-2 in Verriegelungsstellung V angeordnet sind, wie in den Figuren 1B, 1C, 2B, 2C gezeigt ist.

In Figur 2C ist das Stützglied 16A beispielsweise in der geneigten Klapp-Position II des Klapptisches 12 zwischen der zweiten und der dritten Rolle R2/R3 verrastet, nachdem es bei Herunterklappen des Klapptisches 12 aus der ersten Klapp-Position I in die zweite Klapp-Position II über die Endanschlags-Rolle RE1 und die erste und zweite Rolle R1, R2 gelaufen ist.

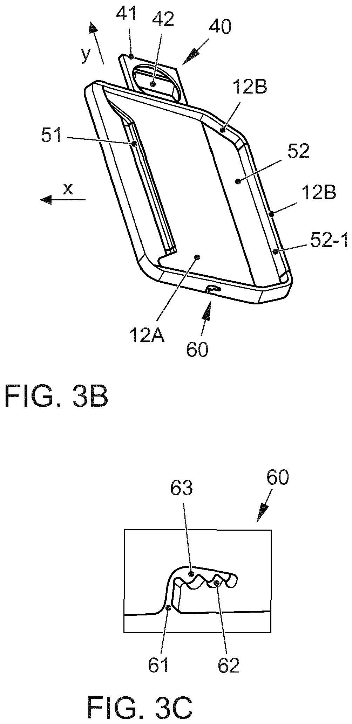

Die Figur 3B zeigt die Grundplatte 12A des Klapptisches 12 mit einer Komfortausstattung.

Als Komfortkomponente umfasst die Grundplatte 12A einen Becherhalter (Cupholder) 40, zwei in die Grundplatte 12A integrierte Ablagekomponenten 51, 52 und eine Kabelbefestigungsvorrichtung 60.

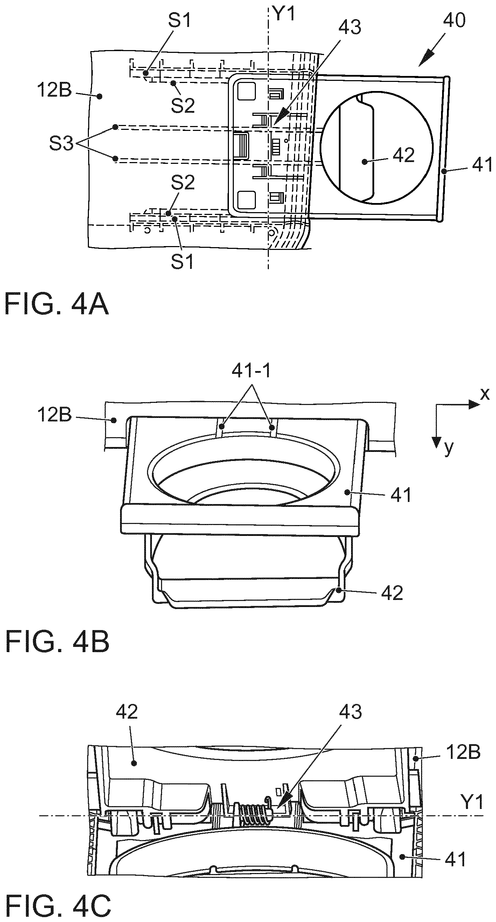

Auf den Cupholder 40 wird in den Figuren 4A bis 4G detailliert eingegangen.

Der Korpus der Grundplatte 12A ist aus einem Spritzgussmaterial, hergestellt im Spritzgussverfahren, ausgebildet. Nach Fertigstellung ist die Grundplatte 12A als stabiler Kunststoffkörper ausgebildet. Die Stützenführungselemente 32, 34 werden in bevorzugter Ausgestaltung einstückig mit angespritzt.

Eine erste Ablagekomponente 51 ist als schräge Vertiefung in den die Auflagefläche für Gegenstände bildenden Teil des Korpus der Grundplatte 12A eingearbeitet.

In die bei der Herstellung der Grundplatte 12A vorzugsweise mitgespritzte erste Vertiefung ist ein erster Einleger der Klapptische 12 aus einem weichen Material, insbesondere einem elastischen Kunststoffmaterial eingelegt.

Die erste Ablagekomponente 51 dient dem Auflegen und Abstützen eines flachen Gegenstandes, insbesondere einem Buch oder einem Tablet-PC 100 oder dergleichen, sobald sich der Klapptisch 12 in der geneigten Klapp-Position II befindet.

Die durch die schräge in Richtung des Benutzers des Klapptisches 12 immer tiefer werdende erste Vertiefung kann auch als Ablage von Schreibutensilien (Stiften, Linealen etc.) dienen. Diese Ablagemöglichkeit von Kleinteilen ist in der im Wesentlichen waagrechten Klapp-Position I als auch in der geneigten Klapp-Position II möglich.

Die schräge erste Vertiefung weist eine Tiefe auf, die dafür sorgt, dass der beispielhaft genannte Tablet-PC 100 sicher in der quer zur Fahrtrichtung x liegenden ersten Vertiefung gehalten wird. Der verwendete weiche elastische Kunststoff weist eine Oberflächenrauigkeit auf, die dafür sorgt, dass der Tablet-PC 100 verrutschsicher an der tiefsten Stelle der Vertiefung gehalten wird. Zudem ist der verwendete Kunststoff hinsichtlich der Oberflächenrauigkeit so weich ausgebildet, dass ein Verkratzen des Tablet-PC 100 beim Auflegen und/oder Abstützen in der ersten Vertiefung vermieden wird.

Eine zweite Ablagekomponente 52 ist ebenfalls mit einem zweiten Einleger versehen. Die zweite Ablagekomponente 52 ist als zweite Vertiefung ausgebildet, die mit dem zweiten Einleger versehen ist. Die zweite Vertiefung ist durch einen Rand 12B an der ansonsten geraden Grundplatte 12A ausgebildet. Innerhalb des Randes 12B bildet sich die zweite Vertiefung, in der auf der Fläche der Grundplatte 12A eine weitere Auflagefläche für Gegenstände gebildet wird.

In der durch den Rand 12B gebildeten Vertiefung der Grundplatte 12A, ist der zweite Einleger bevorzugt nur in einem Teilbereich der Fläche der Grundplatte 12A angeordnet.

Der zweite Einleger bildet einen stufenlosen Übergang zwischen der im Zentrum der Grundplatte 12A liegenden Ablagefläche aus dem härteren Kunststoff und der Ablagefläche, die im Teilbereich der Grundplatte 12A durch den zweiten Einleger als zweite Ablagekomponente 52 gebildet wird. Es versteht sich, dass der zweite Einleger nicht nur im Teilbereich, sondern im gesamten Bereich der Grundplatte 12A angeordnet werden kann.

Die Grundplatte 12A bildet wie Figur 3B verdeutlicht, mindestens eine Umrandung aus, wobei vorgesehen ist, dass der Rand 12B der Grundplatte 12A in Richtung des Benutzers leicht ansteigend ausgebildet ist. Der in der jeweiligen Klapp-Position I, II zu dem Benutzer des Klapptisches 12 weisende Randbereich des Randes 12B weist dabei gegenüber der Ablagefläche des Klapptisches 12 die größte Höhe auf.

Innerhalb der von der Umrandung der Grundplatte 12A des Klapptisches 12 gebildeten weiteren Vertiefung ist der zweite Einleger angeordnet, der die gleichen Eigenschaften und Vorteile aufweist, wie der zuvor erläuterte erste Einleger.

Im Ausführungsbeispiel ist dargestellt, dass die zweite durch den Rand 12B gebildete Vertiefung und der zweite Einleger in der zweiten Vertiefung von einem U-förmig ausgebildeten Rand der Grundplatte 12A begrenzt sind.

Durch die U-förmige Ausbildung weist die Grundplatte 12A des Klapptisches 12 an einer Seite keinen Rand auf. An dieser von dem Benutzer weg weisenden Seite der Grundplatte 12A des Klapptisches 12 beginnt die schräge Vertiefung der ersten Ablagekomponente 51. Die Ablagefläche der ersten Vertiefung der ersten Ablagekomponente 51weist somit an der oberen Seite der Grundplatte 12A keinen bei der Ablage von Gegenständen störenden Rand auf.

Der zweite Einleger bildet bevorzugt in den jeweiligen Klapp-Positionen I, II des Klapptisches 12, in dem die größte Höhe aufweisenden zu dem Benutzer gerichteten Randbereich des Randes, eine Überdeckung 52-1 aus. Der zu dem Benutzer gerichtete Randbereich ist im Bereich der vorgesehenen Überdeckung 52-1 durch eine Materialreduzierung des Randbereiches mit einer Ausnehmung versehen.

Auch in dieser Ausnehmung des Randes 12B wird der zweite Einleger eingelegt und überdeckt dann gemäß dem Ausführungsbeispiel zumindest teilweise die Ablagefläche der Grundplatte 12A des Klapptisches 12 und auch die Innenseite des zu dem Benutzer gerichteten Randbereiches des Randes 12B.

Durch die für den zweiten Einleger vorgesehene Ausnehmung im zum Benutzer gerichteten Randbereich des Randes 12B läuft die Innenfläche des Einlegers störkantenfrei bündig zu den Innenflächen der angrenzenden Randbereiche.

An dem zu dem Benutzer gerichteten Randbereich des Randes 12B kann sich ein Gegenstand, insbesondere in einer der geneigten Klapp-Positionen des Klapptisches 12 sehr gut abstützen und ist somit gegen ein Abrutschen gesichert.

Mit anderen Worten, die Überdeckung 52-1 des zweiten Einlegers ist derart ausgebildet, dass die Dicke des Randes 12B im Bereich der Überdeckung 52-1 gegenüber den angrenzenden Bereichen des Randes 12B gleich bleibt. Dadurch ergibt sich eine gerade Unterstützung eines Tablet-PC 100 insbesondere dann, wenn der Klapptisch 12 in der geneigten Arbeitsposition II genutzt wird, da sich beispielsweise der Tablet-PC 100 in der geneigten Arbeitsposition II im unteren Randbereich des Randes 12B auf der Überdeckung 52-1 des zweiten Einlegers störkantenfrei und rutschsicher und somit komfortabel abstützt.

Die Ablage des Tablet-PC 100 in der zweiten Ablagekomponente 52 ist selbstverständlich sowohl in der im Wesentlichen waagerechten Arbeitsposition I, als auch wie insbesondere die Figur 2C zeigt, in der geneigten Arbeitsposition II möglich.

Die Figur 3C zeigt eine vergrößerte Darstellung einer weiteren Komfortkomponente, in der Art einer Kabelbefestigungsvorrichtung 60.

Es wird deutlich, dass die Kabelbefestigungsvorrichtung 60 eine von der Unterseite der Grundplatte 12A zugängliche, gemäß der Darstellung in Figur 3C vertikale Öffnung 61 aufweist, sobald sich der Klapptisch 12 in der im Wesentlichen waagerechten Arbeitsposition I befindet, die rechtwinklig in einen Aufnahmebereich 63 übergeht. Die Öffnung 61 ist auch zugänglich, wenn sich die Grundplatte 12A in einer geneigten Arbeitsposition II befindet.

Der Aufnahmebereich 63 umfasst in einer dargestellten ersten Ausführungsvariante mehrere halbkreisförmige Kabelaufnahmen 62 unterschiedlichen Durchmessers für Kabel unterschiedlicher Durchmesser. Um einen Festsitz der Kabel mit unterschiedlichen Durchmessern und das Auffinden der passenden Kabelaufnahme 62 nach dem Einführen des Kabels in die Öffnung 61 zu gewährleisten, ist der Aufnahmebereich 63 in Einführrichtung gesehen sich konisch verringernd gestaltet, so dass das jeweilige Kabel durch einfaches Einschieben in Einführrichtung ohne weiteres Zutun des Anwenders automatisch in die passende halbkreisförmige Kabelaufnahme 62 geführt und sicher arretiert wird.

Der Aufnahmebereich 63 umfasst in einer nicht dargestellten zweiten Ausführungsvariante keine Kabelaufnahmen 62 unterschiedlichen Durchmessers für Kabel unterschiedlicher Durchmesser. Um den Festsitz der Kabel mit unterschiedlichen Durchmessern zu gewährleisten, ist der Aufnahmebereich 63 in Einführrichtung gesehen ausschließlich konisch verringernd gestaltet, so das jeweilige Kabel durch einfaches Einschieben in Einführrichtung ohne weiteres Zutun des Anwenders automatisch innerhalb des Aufnahmebereiches 63 in der ausgebildeten Konizität des Aufnahmebereiches 63 arretierbar ist.

Die Figur 4A zeigt eine Draufsicht auf die Grundplatte 12A mit transparent dargestellter Grundplatte zur Verdeutlichung einer weiteren Komfortkomponente, dem Becherhalter 40 (Cupholder), der aus dem Halteteil 41 und dem Abstützelement 42 ausgebildet ist.

Die Figur 4A zeigt die Lagerstelle 43 des gegenüber dem Halteteil 41 schwenkbaren Abstützelementes 42. Die Lagerstelle 43 ist als Drehachse Y1 ausgebildet, so dass das Abstützelement 42 gegenüber dem Halteteil 41 reversibel schwenkbar ist. Die Lagerstelle 43 mit der Drehachse Y1 ist in Figur 4C in vergrößerter Darstellung gezeigt.

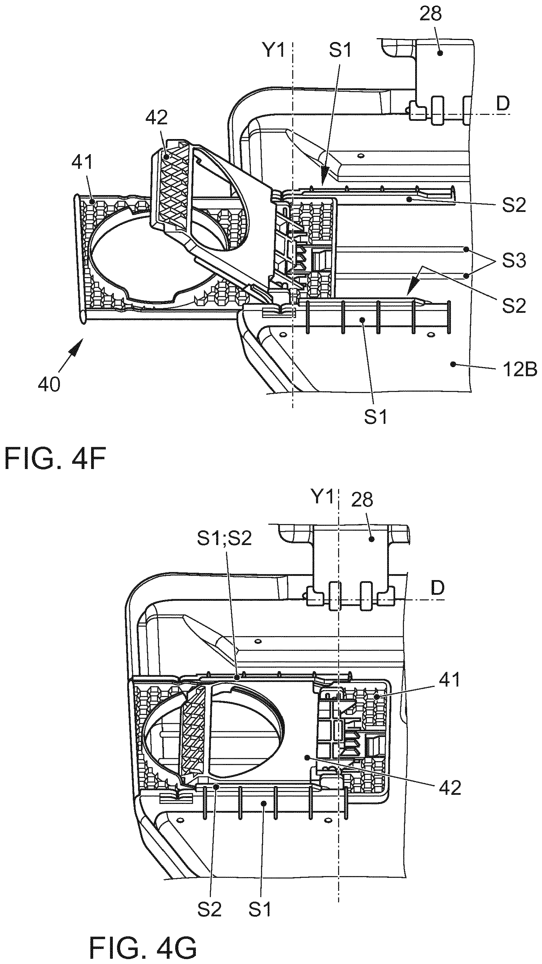

Aus Figur 4A wird ersichtlich, dass im gewählten Ausführungsbeispiel Führungselementepaare S1, S2, S3 ausgebildet sind, damit der Becherhalter 40 von der in Figur 4A dargestellten Gebrauchsposition in eine Nichtgebrauchsposition gemäß Figur 4G verlagerbar ist.

Die äußeren Führungselemente sind als ein erstes und eines zweites Führungselementepaar S1, S2 ausgebildet, worauf noch näher eingegangen wird.

Die inneren Führungselemente S3 sind ebenfalls als Paar ausgebildet, und sorgen gemeinsam mit den äußeren Führungselementepaaren S1, S2 für eine gerade Führung des Halteteiles 41 und des mit dem Halteteil 41 über die Drehachse Y1 verbundenen Abstützelementes 42.

Die Figur 4B zeigt in einer perspektivischen Ansicht auf den Becherhalter 40, dass das Halteteil 41 Vertiefungen 41-1 ausbildet, in denen die inneren Führungselemente S3 paarweise angeordnet sind, wobei das Führungselementepaar S3 in den Vertiefungen 41-1 gleitet, wenn der Becherhalter 40 von der Nichtgebrauchsposition in die Gebrauchsposition und umgekehrt bewegt wird.

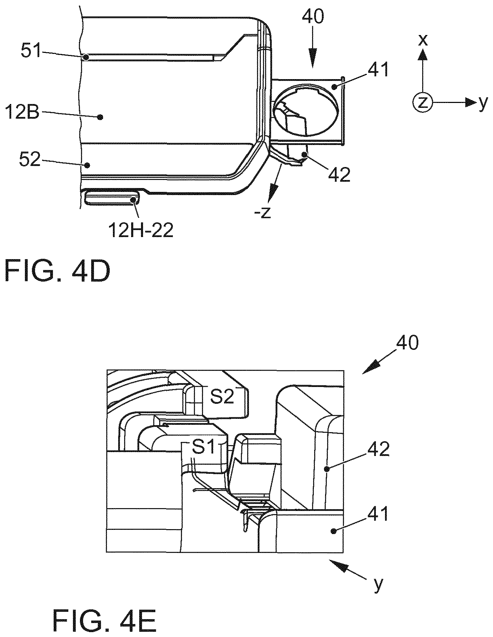

Die Figur 4D zeigt eine weitere perspektivische Übersichtsdarstellung auf den Becherhalter 40.

Es wird deutlich, dass der Becherhalter 40 in der normalen Fahrtrichtung x gesehen, quer zur Fahrtrichtung in y-Richtung aus der Nichtgebrauchsposition aus dem Seitenteil des Korpus der Grundplatte 12A des Klapptisches 12 heraus in die Gebrauchsposition ausfahrbar ist.

Dabei schwenkt das Abstützelement 42, sobald das Abstützelement 42 aus dem Führungselementepaar S2 ausreichend weit heraus gefahren ist, automatisch über die Lagerstelle der Drehachse Y1 nach unten in -z-Richtung in die gewünschte Gebrauchsposition, wie noch näher erläutert wird.

Die Figur 4E zeigt eine perspektivische Seitenansicht auf die äußeren Führungselementepaare S1, S2 des Becherhalters 40, insbesondere des Halteteiles 41 und des Abstützelementes 42.

Zur besseren Verständlichkeit der nachfolgenden Erläuterungen wird auf die Figuren 4F und 4G verwiesen, die eine Unteransicht auf den Becherhalter mit Halteteil 41 und dem Abstützelement 42 in Gebrauchsposition (Figur 4F) und Nichtgebrauchsposition (Figur 4G) zeigen.

Wie bereits erwähnt, sind zwei Paare von äußeren Führungselementen S1, S2 ausgebildet. Es ist ein erstes äußeres Paar von Führungselementen S1 und ein zweites äußeres Paar von Führungselementen S2 ausgebildet.

Das erste äußere Paar von Führungselementen S1 sorgt für eine Führung des Halteteiles 41 beim Ein- und Ausfahren von der Gebrauchsposition in die Nichtgebrauchsposition des Becherhalters 40 und wirkt mit dem mittleren Paar von Führungselementen S3 zur Sicherung der Geradeausführung des Halteteiles 41 und Becherhalters 40 zusammen.

Auf der Innenseite des ersten äußeren Paares von Führungselementen S1 ist das zweite äußere Paar von Führungselementen S2 ausgebildet, welches dafür sorgt, dass das Abstützelement 42 beim Einschieben des Halteteiles 41 unter das zweite äußere Paar von Führungselementen S2 geschoben wird, so dass es langsam um die Drehachse Y1 von der ausgefahrenen heruntergeklappten Gebrauchsposition gemäß Figur 4F in die eingefahrene hochgeklappte Nichtgebrauchsposition gemäß Figur 4G schwenkt.

Das Einfahren des Abstützelementes 42 erfolgt gemeinsam mit dem Einfahren des Halteteiles 41, wobei zunächst das Halteteil 41 einfährt und anschließend das Abstützelement 42 um die Drehachse Y1 eingeklappt und eingefahren wird.

Beim Ausfahren des Becherhalters 40 fährt zuerst das Halteteil 41 aus, wonach das Abstützelement 42 um die Drehachse Y1 in Gebrauchsposition herunter geschwenkt wird.

Zusammenfassend weist der Klapptisch 12 eine komfortable Klappmechanik auf, die es ermöglicht den Klapptisch 12 in verschiedenen Klapp-Positionen I, II zu verlagern und mehrstufig zu verrasten. Die erste und zweite Klapp-Position I, II wurde detailliert erläutert. Zwischen den beiden Klapp-Positionen sind weitere Positionen einstellbar.

Dabei ist innerhalb der vorgeschlagenen Klappmechanik mit Mehrstufen-Verrastung nur eine Stütze 16 angeordnet, die jedoch in vorteilhafter Weise in Kombination mit den anderen Bauteilen der Klappmechanik eine sehr stabile Lage des Klapptisches 12 gewährleistet.

Außerdem ist durch die Mehrstufen-Verrastung sicher gestellt, dass die Neigung des Klapptisches 12 in Abhängigkeit der Lehnenneigung des Rückenlehnenteiles 12 auf die gewünschte Neigung einstellbar beziehungsweise bei einer Veränderung der Lehnenneigung entsprechend nachjustierbar ist. In vorteilhafter Weise ist der Klapptisch 12 an den Blickwinkel des beispielsweise auf das Display des Tablet-PC 100 blickenden Anwenders optimal einstellbar und durch die komfortable Klappmechanik ist der Klapptisch 12 durch die Mehrstufen-Verrastung stets einfach und komfortabel einstellbar und nachjustierbar.

Zudem weist die Grundplatte 12A weitere komfortable Komponenten, wie den integrierten Cupholder 40, die speziellen in die Grundplatte 12A integrierten Ablagekomponenten 51, 52 und die integrierte Kabelbefestigungsvorrichtung 60 auf.

### Bezugszeichenliste

- 12: Klapptisch
- 12A: Grundplatte
- 12B: Rand
- 14: Rückenlehnenteil
- 14A: Polster
- 14B: tragende Struktur
- 12H-1: erster Hebel
- 12H-11: erstes Federelement
- 12H-2: zweiter Hebel
- 12H-21: zweites Federelement
- 12H-22: Bedienelement
- 16: Stütze
- 16-1: erstes Stützenende
- 16-2: zweites Stützenende
- 16A: Stützglied
- 28: Befestigungselement
- 30: Schwenklager
- 32: Stützenführungselement
- 34: Stützenführungselement
- 40: Becherhalter
- 41: Halteteil
- 42: Abstützelement
- 43: Lagerstelle
- 41-1: Vertiefungen
- 51: erste Ablagekomponente
- 52: zweite Ablagekomponente
- 52-1: Überdeckung
- 60: Kabelbefestigungsvorrichtung
- 61: Öffnung
- 62: Kabelaufnahme
- 63: Aufnahmebereich
- 100: Tablet-PC
- Ü: Überstand
- I: erste Klapp-Position
- II: zweite Klapp-Position
- Y1: Drehachse
- H1: erste Hebelschwenkachse
- H2: zweite Hebelschwenkachse
- RE1: erste Endanschlagsrolle
- RE2: zweite Endanschlagsrolle
- R1: Rolle
- R2: Rolle
- R3: Rolle
- V: Verriegelungsstellung
- E: Entriegelungsstellung
- C: Stützenschwenkachse
- D: Klapptischschwenkachse
- S1: äußeres Führungselementepaar
- S2: äußeres Führungselementepaar
- S3: inneres Führungselementepaar
- P1: Pfeil
- P2: Pfeil

## Patentansprüche

1. Klapptisch (12) mit einer gegenüber einer tragenden Struktur (14B) über mindestens eine Stütze (16) in verschiedenen Klapp-Positionen (I, II) abstützbaren Grundplatte (12A), wobei der Klapptisch mindestens eine Komfort-Komponente (12H-1, 12H-2) zum mehrstufigen Verrasten der Grundplatte (12A) in den verschiedenen Klapp-Positionen (I, II) aufweist, **dadurch gekennzeichnet, dass** zum mehrstufigen Verrasten auf der Unterseite der Grundplatte (12A) in den verschiedenen Klapp-Positionen (I, II) eine Klappmechanik ausgebildet ist, die
• einen ersten Klapphebel (12H-1) mit einer ersten Hebelschwenkachse zur Winkeleinstellung des Klapptisches (12) umfasst, der über ein zu der Stütze (16) gehörendes Stützglied (16A) der Stütze (16) in einer Verriegelungsstellung (V) der Klappmechanik zu der Unterseite der Grundplatte (12A) weisende Rastvorkehrungen aufweist, und
• einen zweiten Klapphebel (12H-2) mit einer zweiten Hebelschwenkachse umfasst, wobei der erste Klapphebel (12H-1) für die Winkeleinstellung des Klapptisches (12) über das Stützglied (16A) der Stütze (16) zuständig ist, während der zweite Klapphebel (12H-2) den ersten Klapphebel (12H-1) in der Verriegelungsstellung (V) der Klappmechanik verriegelnd abstützt.

2. Klapptisch nach Anspruch 1, **dadurch gekennzeichnet, dass** mindestens eine weitere Komfort-Komponente (40, 51, 52, 60) zur Ablage oder Aufbewahrung von Gegenständen zugeordnet ist.

3. Klapptisch (12) nach Anspruch 1, **dadurch gekennzeichnet, dass** in die Grundplatte (12A) als weitere Komfort-Komponente ein Becherhalter (40) integriert ist.

4. Klapptisch (12) nach Anspruch 3, **dadurch gekennzeichnet, dass** der Becherhalter (40) ein Halteteil (41) und ein Abstützelement (42) umfasst.

5. Klapptisch (12) nach Anspruch 3, **dadurch gekennzeichnet, dass** das Halteteil (41) über Führungselemente, insbesondere ein erstes Paar von Führungselementen (S1) und das Abstützelement (42) über ein zweites Paar von Führungselementen (S2) aus einer Nichtgebrauchsposition in eine Gebrauchsposition und umgekehrt geführt ist, wobei die Paare von Führungselementen (S1, S2) auf der Unterseite der Grundplatte (12A) angeordnet sind.

6. Klapptisch (12) nach Anspruch 2, **dadurch gekennzeichnet, dass** das Halteteil (41) über Führungselemente, insbesondere ein drittes Paar von Führungselementen (S3) aus der Nichtgebrauchsposition in eine Gebrauchsposition und umgekehrt geführt ist, wobei das dritte Paar von Führungselementen (S3) auf der Unterseite der Grundplatte (12A) angeordnet ist.

7. Klapptisch (12) nach Anspruch 2, **dadurch gekennzeichnet, dass** Becherhalter (40) mit dem Halteteil (41) und dem Abstützelement (42) seitlich der benutzerseitigen Frontseite des Klapptisches (12) aus dem Seitenteil des Korpus der Grundplatte (12A) des Klapptisches (12) aus der Nichtgebrauchsposition in die Gebrauchsposition aus- und einfahrbar ist, so dass die Paare von Führungselementen (S1, S2, S3) quer zur benutzerseitigen Frontseite des Klapptisches (12) verlaufend auf der Unterseite der Grundplatte (12A) angeordnet sind.

8. Klapptisch (12) nach Anspruch 1, **dadurch gekennzeichnet, dass** die Grundplatte (12A) als weitere Komfort-Komponente eine erste Ablagekomponente (51) in der Art einer Vertiefung zum Ablegen und Abstützen von Gegenständen aufweist, wobei die Vertiefung in die Grundplatte (12A) integriert ist.

9. Klapptisch (12) nach Anspruch 1, **dadurch gekennzeichnet, dass** die Grundplatte (12A) als weitere Komfort-Komponente eine zweite Ablagekomponente (52) in der Art einer von einem an der Grundplatte (12A) ausgebildeten Rand (12B) gebildeten weiteren Vertiefung aufweist.

10. Klapptisch (12) nach Anspruch 8, **dadurch gekennzeichnet, dass** der in der mindestens einen Vertiefung angeordnete Einleger (52) von dem Rand (12B) der Grundplatte (12A) begrenzt ist, wobei der Einleger (52) in einem Randbereich des Randes (12B) eine den Rand (12B) ausbildende Überdeckung (52-1) bildet.

11. Klapptisch (12) nach Anspruch 7 oder 8, **dadurch gekennzeichnet, dass** in der mindestens einen Vertiefung der ersten und/oder zweiten Ablagekomponente (51, 52) ein Einleger angeordnet ist, der aus einem die abgelegten und abgestützten Gegenstände verrutschsicher haltenden und oberflächenschonenden Material, insbesondere aus einem weichen elastischen Kunststoff ausgebildet ist.

12. Klapptisch (12) nach Anspruch 1, **dadurch gekennzeichnet, dass** in der Grundplatte (12A) als weitere Komfort-Komponente mindestens eine Kabelbefestigungsvorrichtung (60) integriert angeordnet ist, die insbesondere seitlich der benutzerseitigen Frontseite des Klapptisches (12) in dem Seitenteil des Korpus der Grundplatte (12A) angeordnet ist.

13. Klapptisch (12) nach Anspruch 1, **dadurch gekennzeichnet, dass** erst nach Betätigung des zweiten Klapphebels (12H-2) über ein integriertes Bedienelement (12H-22) eine Entriegelungsstellung (E) der Klappmechanik bewirkbar ist, da erst ein durch die Betätigung hervorgerufenes Verschwenken des zweiten Klapphebels (12H-2) um seine zweite Hebelschwenkachse (H2) den ersten Klapphebel (12H-1) und die zu der Unterseite der Grundplatte (12A) weisenden Rastvorkehrungen freigibt.

## Claims

1. Folding table (12) with a base plate (12A) which, with respect to a supporting structure (14B), can be supported in different folding positions (I, II) by means of at least one support (16), wherein the folding table has at least one comfort component (12H-1, 12H-2) for multi-stage locking of the base plate (12A) in the various folding positions (I, II), **characterized in that,** for multi-stage locking in the various folding positions (I, II), a folding mechanism is formed on the underside of the base plate (12A), which folding mechanism
• comprises a first folding lever (12H-1) having a first lever pivot axis for the angular adjustment of the folding table (12), which has latching projections which, in a locking position (V) of the folding mechanism, point toward the underside of the base plate (12A) via a support member (16A) of the support (16) that belongs to said support (16), and
• comprises a second folding lever (12H-2) having a second lever pivot axis, wherein the first folding lever (12H-1) is responsible for the angular adjustment of the folding table (12) via the support member (16A) of the support (16), whereas the second folding lever (12H-2) supports, in a locking manner, the first folding lever (12H-1) in the locking position (V) of the folding mechanism.

2. Folding table according to claim 1, **characterized in that** at least one further comfort component (40, 51, 52, 60) is associated for depositing or storing objects.

3. Folding table (12) according to claim 1, **characterized in that** a cup holder (40) is integrated into the base plate (12A) as a further comfort component.

4. Folding table (12) according to claim 3, **characterized in that** the cup holder (40) comprises a holding part (41) and a supporting element (42).

5. Folding table (12) according to claim 3, **characterized in that** the holding part (41), via guide elements, especially a first pair of guide elements (S1), and the support element (42), via a second pair of guide elements (S2), are guided from a non-use position into a use position and vice versa, wherein the pairs of guide elements (S1, S2) are arranged on the underside of the base plate (12A).

6. Folding table (12) according to claim 2, **characterized in that** the holding part (41) is guided via guide elements, especially a third pair of guide elements (S3), from the non-use position into a use position and vice versa, wherein the third pair of guide elements (S3) are arranged on the underside of the base plate (12A).

7. Folding table (12) according to claim 2, **characterized in that** the cup holder (40) with the holding part (41) and the support element (42) lateral to the user-side front of the folding table (12) can be moved out of or into the side part of the body of the base plate (12A) of the folding table (12), from the non-use position into the use position, so that the pairs of guide elements (S1, S2, S3) are arranged on the underside of the base plate (12A), running transversely to the user-side front of the folding table (12).

8. Folding table (12) according to claim 1, **characterized in that** the base plate (12A) has, as a further comfort component, a first storage component (51) in the manner of a recess for depositing and supporting objects, wherein the recess is integrated into the base plate (12A).

9. Folding table (12) according to claim 1, **characterized in that** the base plate (12A) has, as a further comfort component, a second storage component (52) in the manner of a further recess formed by an edge (12B) fashioned on the base plate (12A).

10. Folding table (12) according to claim 8, **characterized in that** the insert (52) arranged in the at least one recess is bounded by the edge (12B) of the base plate (12A), wherein, in an edge region of the edge (12B), the insert (52) forms an overlap (52-1) that forms the edge (12B).

11. Folding table (12) according to claims 7 or 8, **characterized in that** an insert is arranged in the at least one recess of the first and/or second storage component (51, 52), said insert being formed from a surface-protecting material, especially from a soft, resilient plastic, which holds the deposited and supported objects so that they cannot slip.

12. Folding table (12) according to claim 1, **characterized in that** at least one cable fastening device (60) is integrated into the base plate (12A) as a further comfort component and is arranged in particular to the side of the user-side front of the folding table (12), in the side part of the body of the base plate (12A).

13. Folding table (12) according to claim 1, **characterized in that** only after actuation of the second folding lever (12H-2) via an integrated control element (12H-22) can an unlocking position (E) of the folding mechanism be effected, since only a pivoting of the second clamp lever (12H-2) about its second lever pivot axis (H2), caused by the actuation, releases the first folding lever (12H-1) and the latching projections pointing toward the underside of the base plate (12A).

## Revendications

1. Tablette rabattable (12) comprenant un plateau de base (12A) pouvant être soutenu, par rapport à une structure portante (14B), au moyen d'au moins un support (16) dans différentes positions de rabattement (I, II), dans laquelle ladite table rabattable comporte au moins un composant de confort (12H-1, 12H-2) destiné à l'encliquetage à plusieurs niveaux du plateau de base (12A) dans différentes positions de rabattement (I, II), **caractérisée en ce que**, pour l'encliquetage à plusieurs niveaux sur une face inférieure du plateau de base (12A) dans différentes positions de rabattement (I, II), un mécanisme de rabattement est conçu, lequel
• comporte un premier levier de rabattement (12H-1) comportant un premier axe de pivotement de levier destiné au réglage angulaire de la tablette rabattable (12), lequel comprend des moyens d'encliquetage orientés,, à l'aide d'un élément de support (16A), appartenant au support (16), du support (16), dans une position de verrouillage (V) du mécanisme de rabattement, vers la face inférieure du plateau de base (12A), et
• un second levier de rabattement (12H-2) comportant un second axe de pivotement de levier, dans laquelle le premier levier de rabattement (12H-1) est chargé du réglage angulaire de la tablette rabattable (12) au moyen de l'élément de support (16A) du support (16), tandis que le second levier de rabattement (12H-2) soutient par verrouillage le premier levier de rabattement (12H-1) dans la position de verrouillage (V) du mécanisme de rabattement.

2. Tablette rabattable selon la revendication 1, **caractérisée en ce qu'**au moins un autre composant de confort (40, 51, 52, 60) est destiné à la pose ou au stockage des objets.

3. Tablette rabattable (12) selon la revendication 1, **caractérisée en ce qu'**un porte-gobelet est intégré dans le plateau de base (12A) en tant qu'autre composant de confort.

4. Tablette rabattable (12) selon la revendication 3, **caractérisée en ce que** le porte-gobelet (40) comporte une partie de retenue (41) et un élément d'appui (42).

5. Tablette rabattable (12) selon la revendication 3, **caractérisée en ce que** la partie de retenue (41) est guidée au moyen des éléments de guidage, en particulier d'une première paire d'éléments de guidage (S1), et que l'élément d'appui (42) est guidé au moyen d'une deuxième paire d'éléments de guidage (S2), d'une position de non-utilisation à une position d'utilisation et inversement, dans laquelle lesdites paires d'éléments de guidage (S1, S2) sont disposées sur la face inférieure du plateau de base (12A).

6. Tablette rabattable (12) selon la revendication 2, **caractérisée en ce que** la partie de retenue (41) est guidée au moyen des éléments de guidage, en particulier d'une troisième paire d'éléments de guidage (S3), de la position de non-utilisation à une position d'utilisation et inversement, dans laquelle ladite troisième paire d'éléments de guidage (S3, S2) est disposée sur la face inférieure du plateau de base (12A).

7. Tablette rabattable (12) selon la revendication 2, **caractérisée en ce que** le porte-gobelet (40) peut, au moyen de la partie de retenue (41) et de l'élément d'appui (42), être sorti et entré, latéralement par rapport à la face avant côté utilisateur de la tablette rabattable (12), d'une partie latérale d'un corps du plateau de base (12A) de la tablette rabattable (12), de la position de non-utilisation à la position d'utilisation, de telle sorte que les paires d'éléments de guidage (S1, S2, S3) sont disposées sur la face inférieure du plateau de base (12A) perpendiculairement à la face avant côté utilisateur de la tablette rabattable (12).

8. Tablette rabattable (12) selon la revendication 1, **caractérisée en ce que** le plateau de base (12A) comporte en tant qu'autre composant de confort un premier composant de pose (51) sous la forme d'une cavité destinée à la pose et au support des objets, dans laquelle ladite cavité est intégrée dans le plateau de base (12A).

9. Tablette rabattable (12) selon la revendication 1, **caractérisée en ce que** le plateau de base (12A) comporte en tant qu'autre composant de confort un second composant de pose (52) sous la forme d'une autre cavité sous la forme d'un rebord (12B) conçu sur le plateau de base (12A).

10. Tablette rabattable (12) selon la revendication 8, **caractérisée en ce que** l'élément de pose (52) disposé dans l'au moins une cavité est limité par le rebord (12B) du plateau de base (12A), dans laquelle ledit élément de pose (52) forme dans une zone de rebord du rebord (12B) une couverture (52-1) formant le rebord.

11. Tablette rabattable (12) selon la revendication 7 ou 8, **caractérisée en ce que**, dans l'au moins une cavité du premier et/ou du second composant de pose (51, 52), un élément de pose est disposé, lequel est conçu d'une matière, maintenant de manière à ne pas glisser les objets posés et soutenus sans abîmer la surface, en particulier d'une matière plastique élastique souple.

12. Tablette rabattable (12) selon la revendication 1, **caractérisée en ce que**, dans le plateau de base (12A), en tant qu'autre composant de confort, au moins un dispositif de fixation de câbles (60) est intégré, lequel est disposé, en particulier latéralement par rapport la face avant côté utilisateur de la tablette rabattable (12), dans la partie latérale du corps du plateau de base (12A).

13. Tablette rabattable (12) selon la revendication 1, **caractérisée en ce que**, après l'actionnement du second levier de rabattement (12H-2) au moyen d'un élément de commande (12H-22) intégré, une position de déverrouillage (E) du mécanisme de rabattement ne peut être provoquée, car seul un pivotement du second levier de rabattement (12H-2) autour de son second axe de pivotement de levier (H2), provoqué par l'actionnement, libère le premier levier de rabattement (12H-1) et les moyens d'encliquetage orientés vers la face inférieure du plateau de base (12A).
